# EUROPEAN PATENT SPECIFICATION

(11) **EP 4 595 799 B1**
(45) Date of publication and mention of the grant of the patent: **29.04.2026**
(21) Application number: 25172494.4
(22) Date of filing: 21.11.2012
(51) Int. Cl.: A43B 23/02, A43B 23/24, A43B 23/04, A43B 3/00, B33Y 80/00

(54) **SHOE**
SCHUH
CHAUSSURE

(30) Priority: 21.11.2011 DE 102011086742
(43) Date of publication of application: 06.08.2025
(62) Divisional of application: 19196977.3
(73) Proprietor: adidas AG, 91074 Herzogenaurach (DE)
(72) Inventor: ANTONELLI, Bruno Jean, 74940 Annecy le vieux (FR); LUDWIG, Nina, 56414 Hundsangen (DE); ROBINSON, Timothy Kelvin, Arlington, MA, 02475 (US); PRICE, Daniel Stephen, 91074 Herzogenaurach (DE)
(74) Representative: Bardehle Pagenberg Partnerschaft mbB Patentanwälte Rechtsanwälte

(56) References cited:
- GB-A- 1 445 781
- US-A1- 2009 110 919
- US-A1- 2011 258 883

## Description

### 1. Technical field:

The present invention relates to shoes, and in particular to sports shoes.

### 2. Prior art:

Usually, shoes provide a variety of different functionalities. It can be distinguished between functionalities of the sole such as slip resistance, compression strength or cushioning of impacts on the one hand, and between functionalities of the upper. For instance, the upper may provide stabilization of the foot, cushioning of movements of the foot, protection from moisture or wind, abrasion protection or good breathability. The respective functionalities, therein, often pose different requirements at different zones of the upper. In order to meet these requirements, various approaches are known in the prior art.

Commonly, for zones of an upper, which are supposed to provide different functionalities, individual parts are made of different materials wherein the parts are then assembled to form an upper and finally a shoe. For example, the zones which are supposed to provide an increased stabilization of the foot may be manufactured from stronger material. Mostly, the various parts are assembled by sewing.

Alternatively, the US 2008/0250668 A1 describes a shoe whose parts are assembled by a gluing method.

The US 2007/0022627 A1 discloses stability ribs which are attached to the outer parts of a shoe at desired positions.

However, these approaches known from the prior art require a very complex manufacturing process since several parts have to be assembled to form an upper in a quite labor-intensive manner. The efforts which are required for the assembly of the parts moreover lead to the restriction that eventually only a low number of parts with relatively large areas can be used. Thus, the respective functionality which is provided by the part can only be adjusted on a large scale and hence only in a relatively coarse manner.

The US 7,047,668 B2 discloses a further approach, and in particular a shoe wherein the upper partly consists of a substrate layer and a polymer layer. The substrate layer may for example consist of textiles in the form of a mesh material. The polymer layer may have the general configuration of a web and its thickness may relate to the relative degrees of wear within the shoe. The polymer layer is deposited on the substrate layer using a casting process. This casting process, however, is very energy-intensive, time consuming and complex.

The DE 33 47 237 A1 discloses a method for manufacturing reinforcing elements by using a meltable plastic powder. The plastic powder is applied onto a supporting element in the shape of the desired reinforcing element by employing a screen printing method. Then, it is melted in a heating station and finally glued onto the upper of the shoe and cooled down under application of pressure. This method also requires lots of energy and comprises a complex melting process. Due to the granularity of the powder, the melting which could, e.g., cause shrinking, and due to the transfer from the supporting element onto the upper, the precision and applicability of this method is limited.

The DE 35 39 573 C2 further discloses a method for producing a three-dimensional reinforcing element. Meltable plastic powder is applied onto a supporting element by a stencil printing method. Then it is pre-heated such that the surface of the plastic sinters. Then, the powder is compressed using a pressure element, and after sintering of the plastic elements melted onto the pressure element and picked up. In a further step, the reinforcing element is applied to the upper of the shoe which is to be reinforced. Besides the already mentioned disadvantages of melting- and transfer methods, additional imprecisions arise due to the double transfer of the element from the supporting element to the pressure element and then to the upper of the shoe. Moreover, this method requires manufacturing a complex pressure element which increases the cost of the method.

GB 1 445 781 A relates to an improvement in the manufacture of footwear which incorporates fabric uppers.

US 2011/0258883 A1 relates to a ball control portion which extends from one side to an underside of an article of footwear. The ball control portion includes a lattice with a plurality of protrusions arranged in a grid. The plurality of protrusions includes multiple groups of protrusions arranged with one or more of different orientations, types, and heights.

US 2011/0061149 A1 relates to a fitness sock suitable for being worn in the performance of gymnastic activities. The sock comprises anti-slipping means positioned on a plantar surface of the sock.

DE 601 06 757 T2 relates to an improved structure of ski boots comprising a heating insert for thermoforming and/or heating and drying of the inner part of the boot.

US 2011/247240 A1 discloses an article of footwear with a ball contacting surface. The ball contacting surface includes a raised peak member at the top and gripping members along a medial side.

WO 2010/055276 A1 discloses a ball control component for a sports boot or accessory comprising a three-layered composite of synthetic, rubber like material including a ball contact layer, a middle layer and a base layer, wherein the base layer has the highest Shore resilience and the middle layer has a Shore resilience of from 20 % to 60 % of the Shore resilience of the base layer and an average thickness greater than that of the ball contact layer.

US 5 896 683 A discloses an article of footwear that includes at least one support which limits eversion and inversion while permitting a full range of motion in the plantar and dorsi flexion plane. The support includes a plurality of finger-like elements extending vertically upward from the sole along the upper. The breadth of each finger-like element is greater than its width so that the element will freely bend in the dorsi and plantar flexion plane and not in the medial and lateral flexion plane.

US 7 155 846 B2 discloses an article of footwear that includes a sole assembly and an upper secured to the sole assembly. A plurality of ribs is positioned on an exterior surface of at least one of the upper and the sole assembly, with each rib including a plurality of faces and each face having an image thereon.

US 2009/110919 A1 discloses a method for reducing the afterflame of a flammable, meltable material. A textile composite is described comprising an outer textile comprising a flammable, meltable material, and a heat reactive material comprising a polymer resin-expandable graphite mixture.

It is therefore the problem of the present invention to overcome at least parts of the specified disadvantages of the prior art and thus to provide a shoe with adjusted functionalities in different zones which may be manufactured easily.

### 3. Summary of the invention:

The invention is defined by the independent claims.

The present invention enables manufacturing shoes in a completely novel manner by means of a directly and functionally printed portion. Such directly functionally printed portion allows manufacturing shoes with functional zones wherein the labor-intensive assembly of different materials is avoided. In addition, no elaborate casting process is necessary. Moreover, no transfer is needed. Instead, a functional second layer is simply printed directly on the first layer. This enables a production process which is significantly less labor-intensive, faster and more cost-effective.

In addition, the direct printing of a functional second layer allows precisely adjusted functionalities. The precision of direct printing methods allows creating very fine structures with small thickness. Thereby, it is possible to adapt the functionality of the respective portion in the different zones precisely to the requirement in the respective zone.

Moreover, the direct printing enables a particularly large degree of flexibility in the manufacturing process since virtually arbitrarily adapted forms or structures may be printed. In addition, by means of the simple direct printing, various functional second layers may be produced without changing manufacturing steps and without having to adjust manufacturing steps to each other. One reason is that printers can easily be programmed. Another reason is that stencils (e.g., for screen printing, rotary printing and so on) may easily be changed and are cheap in production.

In a preferred embodiment, the portion comprises essentially the entire upper of the shoe. This allows for a quick and cheap manufacture of the upper with locally adapted functionality since none or only a few elements have to be assembled. Furthermore, the wearing comfort can be particularly good as the shoe comprises only few transition areas or joints that could cause discomfort to the wearer.

In a preferred embodiment, the functional second layer is directly printed onto the first layer by means of a screen printing process. This allows for a particularly fast and cheap printing. Moreover, screen printing is a very precise technique.

In a further preferred embodiment, the functional second layer is printed onto the first layer by means of inkjet-printing. Inkjet-printing is also very precise. Furthermore, inkjet-printing allows to easily program the printer and thus to change the second layer. Therein, by using several ink cartridges different colours may be printed.

In a preferred embodiment, the functional second layer is adapted to modify at least one mechanical property of the portion. The properties of the first layer, e.g. the material which is used, its elastic stretchability, its thickness etc., together with the properties of the second layer, define the properties of the portion. As a result, the shoe can be locally adjusted to the various requirements of the user.

In a particularly preferred embodiment, the functional second layer changes the elasticity of the portion. For instance, the portion could be provided with increased stability, i.e. increased stiffness. By improving the fixation of the foot, e.g., the wearing comfort could be improved. On the other hand, a large flexibility allows for a particularly soft cushioning of the movement of the foot in the portion.

In a particularly preferred embodiment, the functional second layer changes the cushioning of the portion. For instance, an increased cushioning in a football shoe allows absorbing the shocks onto the foot occurring at hard kicks.

In a further particularly preferred embodiment, the functional second layer changes the stiction of the portion. This is, e.g., advantageous for football shoes wherein a portion with increased stiction could support the ball control.

Moreover, the second functional layer can change the abrasion resistance of the portion of the shoe. Thus, the longevity of the shoe may be increased. For instance, this is advantageous for skateboard shoes, or similar shoes, which are exposed to an increased friction between the shoe and the skateboard.

Additionally, to the already mentioned aspects, the functional second layer could be formed such that it provides the portion with particular protective functions. As an example, the functional second layer can increase the cut resistance of the portion. Thus, a particularly safe shoe can be provided.

Moreover, the functional second layer could provide for a particularly windproof portion. Thereby, the outdoor suitability of the shoe can be increased.

Moreover, the functional second layer could provide for a waterproof portion. This is particularly advantageous for outdoor shoes since the shoe protects the foot from rain or splash water.

In addition to the mentioned functionalities, the functional second layer may change the mechanic properties of the portion in many other ways.

In a preferred embodiment, the portion can be elastically deformed by at least 30%, preferably by at least 50%, at least along one direction. Thereby, the shoe can be elastically flexible or elastically compressible. Due to this elasticity, the portion can for example flexibly adjust to the exact size and shape of the foot. Moreover, the wearing comfort may thus be improved since the portion feels particularly soft.

In a preferred embodiment, the functional second layer comprises polyurethane. Polyurethane allows for functional second layers with particularly advantageous mechanical properties.

In a particularly preferred embodiment, the functional second layer comprises a poly(tetrahydrofurane)-based polyurethane dispersion (tetrahydrofurane: THF). Using the poly-THF-based polyurethane dispersion allows particularly precise direct printing and enables portions with excellent elasticity properties, even if the printed second layers are thin. These second layers are characterized by large tensile strength, low hysteresis and longevity.

In a preferred embodiment, the functional second layer modifies the elasticity of the portion, which is in general determined by the combination of the properties of the first and second layers, in an anisotropic manner. Thus, the elasticity can be adapted such that deforming the portion in different directions requires different forces. For example, the forces which are required for an elastic deformation of the portion along the longitudinal and lateral directions of the shoe, respectively, can be controlled independently from each other. The portion may be characterized, e.g. by a lower elastic restoring force along the longitudinal direction of the shoe. Thus, the portion is more stretchable in this direction and thus better adjusts to the shape of the foot. At the same time, the increased elastic restoring force along the lateral direction of the shoe allows an improved stabilization of the foot within the shoe. Thus, the adjustment of the shoe and the stability provided by the shoe can be designed in a particularly advantageous manner. For example, a precise adaptation to specific types of sports/motion sequences may thus be achieved, e.g. to lateral types of sports such as football, basketball or tennis as opposed to linear types of sports such as running.

In a preferred embodiment, the functional second layer comprises a plurality of isolated layer areas. These can be directly printed in a single printing step. The functional second layer does not have to be deposited essentially area-wide. Rather, by means of direct printing it can be specifically deposited locally, where it is actually required. Thus, the area of the functional second layer can be reduced to the amount which is actually required, leading to a lighter and more breathable shoe. In addition, the material costs of the shoe can be reduced.

In a particularly preferred embodiment, at least one isolated layer area of the second layer at least in one direction comprises dimensions which are smaller than 2 mm. By means of such small areas, the functionality of the portion can be controlled with high local resolution.

In a preferred embodiment, the functional second layer is only arranged on selected zones of the first layer. Since the functional second layer is only required in certain zones, it is accordingly also only arranged in these zones where it is actually needed, for example for modifying at least one mechanical property of the portion. The remaining zones are free of the second layer such that an increased breathability of the portion can be achieved. Moreover, the weight of the portion can thus be minimized.

In a particularly preferred embodiment, the zones are arranged along a collar and/or in one or more of the following parts: in a transition area between upper and sole, in a toe area, in a heel area, in an area of the lateral and/or medial midfoot joints. Thereby, these zones may have an increased strength.

Arranging the zones along the collar of the shoe improves the hold of the foot in the upper and prevents unwanted slipping out of the shoe or even losing the shoe.

Arranging the zones in a transition area between upper and sole improves the stability provided to the foot by the upper, and particularly prevents sliding of the foot within the shoe. This is particularly important for lateral movements.

Arranging the zones in the toe area allows for additional stabilization of the foot. This is particularly advantageous for running, wherein the first ground contact often occurs in the toe area, but also for stopping/decelerating. Moreover, the particularly tight contact of foot and toes creates the feeling of a particularly sensitive shoe.

Arranging the zone in the heel area results in a stabilization of the heel in the shoe and avoids the heel sliding out of the shoe, as well as unpleasant rubbing of the heel on the shoe.

Arranging the zones in the area of the lateral and/or medial midfoot joints allows additionally stabilizing the foot. Due to the rather small dimension of the foot in this area, a stabilization of the foot in this area is perceived as being particularly less annoying.

Besides the above-mentioned advantageous arrangements of the zones, other embodiments may comprise other or differently arranged zones.

In a particularly preferred embodiment, the zones are selected according to the mechanical loading which occurs when using the shoe. Thus, for example, in zones in which large tensile strain occurs during use, the functional second layer can provide an increased elastic restoring force and thus increased stiffness.

Particularly preferred, the functional second layer is not arranged in an instep area. In a particularly preferred embodiment this alleviates putting on the shoe as well as improved adaptation of the portion to different heights of insteps. In another embodiment, the number and/or the dimensions of the zones in which the functional second layer is arranged could be merely reduced in the area of the instep.

Moreover, it is particularly preferred that the second layer is not arranged in an area between the toe joints and the midfoot joints. Thereby, it is possible, e.g., to improve rolling off the foot due to increased elasticity. In another embodiment, the number and/or the dimensions of the zones in which the functional second layer is arranged could merely be reduced in the area between the toe joints and the midfoot joints.

In a further preferred embodiment, further or different areas of the upper are free of the second layer.

In a preferred embodiment, the first layer is elastic. Thus, a particularly good adjustment of the portion to the shape of the foot of the user can be achieved. Moreover, a better adaptation to the respective forces when wearing the shoe can be achieved. If the first layer is embodied as a mesh, the elasticity is preferably provided both in warp and weft directions. However, also embodiments with a mesh that is elastic only in warp or only in weft direction may be realized.

In a further preferred embodiment, the first layer is breathable. Thus, an increased breathability of the portion can be achieved, i.e. the exchange of temperature and humidity between the sectors separated by the first layer within and outside of the shoe, respectively, is improved.

In a preferred embodiment, the first layer is manufactured from a non-woven material, in particular a weft knitted or a warp knitted material. Weft knitted and warp knitted materials for an upper of a shoe may be manufactured particularly efficiently. Thus, it is advantageous to use this material for an upper of a shoe or at least a portion thereof. Further, directly printing a functional second layer onto a first layer manufactured from this material allows locally adjusting the mechanical properties of the portion, and thus improving the functionality of the upper. The usability of weft knitted or warp knitted material for a portion of an upper may thus be greatly improved.

In a further preferred embodiment, the first layer comprises a mesh which is elastic in warp and/or weft direction.

In a further preferred embodiment, the first layer is anisotropically elastic, e.g. if a mesh has a higher elasticity in warp direction than in weft direction. Thus, the first layer can effect an anisotropic adjustment of the portion to the shape of the foot of the user and to the respective loading during usage. The anisotropic elasticity of the first layer can locally be further supported by the printed functional second layer or it can locally be counteracted by the latter, such that the functionality of the portion can additionally be improved.

In a preferred embodiment, the portion comprises a functional third layer. The possibility of printing a third and possibly further functional layers allows an advantageous combination of various functionalities. The functional layers can be printed using different materials. The functional layers may each provide various functions. In an embodiment, the second layer could, for instance, change the elasticity of the portion and the functional third layer could change the stiction. The functionalities of the functional layers may result in an advantageous total functionality.

In a particularly preferred embodiment, the functional third layer is printed directly onto the first layer. Thereby, the functional third layer can also be printed next to the functional second layer or also be fitted into the functional second layer.

In a further particularly preferred embodiment, the functional third layer is printed directly onto the functional second layer. In particular, the functional third layer may cover the functional second layer completely or partially. This allows providing specific zones with several functionalities at the same time. In other embodiments, the functionality of the second layer may be increased by printing the third layer.

In another particularly preferred embodiment, the functional third layer is directly printed onto the first layer and the functional second layer, possibly in an overlapping manner. This is particularly advantageous since the functionalities of the respective layers can provided independently of each other.

In a further preferred embodiment, the portion comprises at least one further directly printed functional layer. In a further embodiment, the portion may comprise more than two directly printed functional layers. A particularly preferred embodiment comprises six printed layers. The respective functional layers can be printed next to each other or exactly fit into each other. Thereby, they could be perfectly congruent or some of the layers overlap the lower layers only partially. Moreover, the functional layers can be printed partially overlapping onto the first layer and one or more previously printed functional layers. Thereby it is possible to print a wide variety of different functional layers made of different or the same materials. Their functionality may be combined flexibly to an overall functionality of the portion which is - more or less - determined by all layers. Moreover, in this way a wide variety of desired optical appearance can be achieved.

According to the present invention, a method of direct printing onto a first layer of at least a portion of an upper of a shoe is provided according to claim 1. Thereby, initially a first layer is provided. Moreover, a functional second layer is directly printed onto the first layer.

The printing method allows for a particularly precise, cost-effective and flexible manufacture of an upper of a shoe having different functional zones.

In a preferred embodiment, one or more further functional layer(s) is/are directly printed onto the functional second layer and/or the first layer.

In another preferred embodiment, the functional second layer is dried prior to printing a further layer. Therein, the drying can be given by a complete drying process or only consist of drying the surface of the functional layer. Particularly preferred, the functional second layer is dried using a flash drying chamber. As a result of the drying, the adhesion of the layers with respect to each other may be improved and a particularly homogeneous functional second layer may be provided.

In a further particularly preferred embodiment, the functional second layer is cured. On one hand, this is particularly advantageous for accelerating the production process. On the other hand, curing additionally allows a precise control over the mechanical properties of the functional second layer.

In a further particularly preferred embodiment, providing the first layer comprises providing a first layer manufactured from a non-woven material, in particular a weft knitted or a warp knitted material. Weft knitted and warp knitted material for at least a portion of an upper of a shoe may be manufactured particularly efficiently. Directly printing a functional second layer onto a first layer manufactured from this material further allows locally adjusting the mechanical properties of the portion, and thus improving its functionality, as described in various embodiments. Hence, a particularly advantageous method for providing an upper of a shoe or a portion thereof is provided. Further presently preferred embodiments of the shoe according to the invention are described in the dependent claims.

### 4. Short description of the figures:

In the following detailed description, presently preferred embodiments of the invention are described referring to the following figures:
Fig. 1a-c: Partitioning of a running shoe into different zones; and comparison with the skeleton of a human foot;
Fig. 2: Example for the strain of a foot which occurs during running;
Fig. 3a-d: Embodiment of a shoe. The upper of the shoe comprises a portion with directly printed functional second layer which locally modifies the functionality of the portion. For comparison the strain of the foot which occurs during running is shown;
Fig. 3e: Embodiment of a first layer according to Figs. 3b, 3d, wherein the functional second layer is directly printed. The functional second layer comprises areas, which are printed essentially area-wide, and zones having isolated layer areas;
Fig. 4a-b: Force-strain diagrams of portions of a first layer made from polyester mesh; Force-strain diagrams of portions having a first layer made from polyester printed with poly-THF-based polyurethane dispersion; the strain is accomplished along the warp (Fig. 4a) and along the weft (Fig. 4b) of the mesh of the first layer;
Fig. 5: Embodiment of a shoe with a first layer which is printed directly with a functional second layer, wherein the functional second layer comprises zones, which are printed essentially area-wide, and zones with isolated layer areas;
Fig. 6a-c: Examples of preferably printed zones of football shoes;
Fig. 7a-b: Embodiment for directly printing a first layer with several functional layers;
Fig. 8: Further embodiment of a shoe. The embodiment comprises a portion with first layer and several directly printed functional layers.
Fig. 9: Example for direct printing of a first layer with several functional layers; and
Fig. 10a-d: Further embodiment of a shoe with a directly printed functional second layer.

### 5. Detailed description of preferred embodiments:

In the following detailed description, presently preferred embodiments of the invention are described referring to sports shoes. However, it is emphasized that the present invention is not restricted to these embodiments. The present invention can for example also be applied to work shoes, leisure shoes or other shoes.

Before describing the embodiments in detail, first, the principle of different functional zones of a shoe is generally explained.

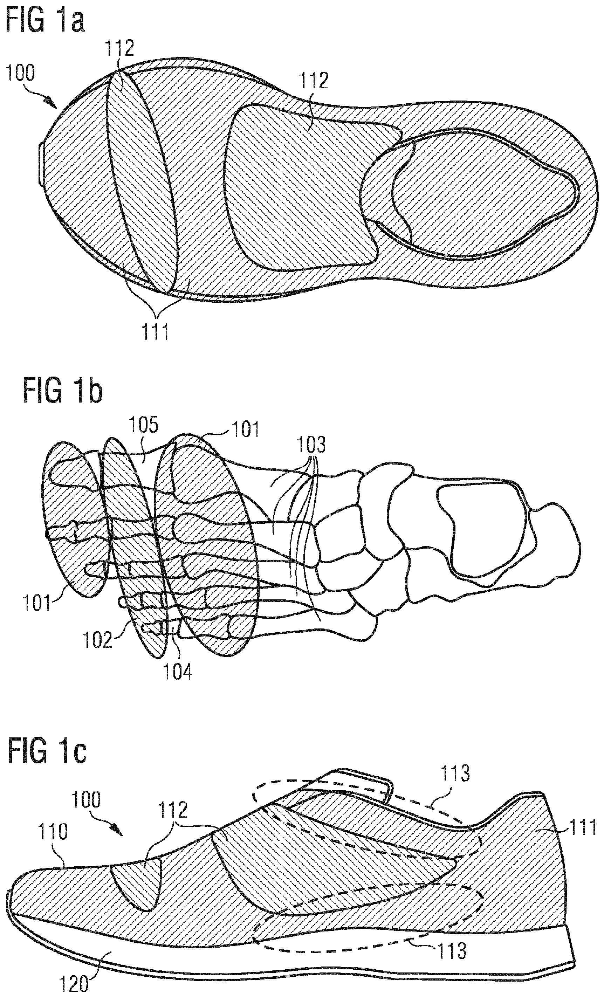

The Figs. 1a and 1c show an example for a shoe, which is partitioned into various zones with different functional requirements. More precisely, the Figs. 1a and 1c show a top view and a side view of an example for a running shoe 100. The illustrated running shoe 100 comprises a sole 120 and an upper 110. The upper comprises zones 111 which require increased stability and zones 112 in which increased flexibility is desired. The zones 111 and 112 of the shoe can for example be adapted to the anatomy of the human foot. Figure 1b shows corresponding zones 101 and 102 of the skeleton of the human foot which require increased stability and flexibility, respectively. For example, the zone 102 between phalanx proximalis of the great toe 105 and phalanx distalis of the little toe 104, and between the midfoot joints and the toe joints, respectively, shown in Fig. 1c increased flexibility of the shoe is required due to the flexing action of the toes when running. However, in the zone 101 of the toes and above the metatarsal 103, increased stability is desirable.

By means of reduced strength in the zones 112, a running shoe according to example 100 can achieve an increased wearing comfort and a reduction of possible bruises at the foot. Further, by means of increased strength in the zones 111, for example, the lifetime of the shoe can be increased. It will wear out or become defective, by ripping or the like, less quickly. The running shoe 100 comprises additional zones 113 which require particularly increased stability. By means of a corresponding, specifically adapted stability, the risk of injuries, e.g. by twisting one's ankle, associated with the particular use of the shoe may be minimized. Using enforcing elements only in zones 113 where these are actually needed, in addition, allows minimizing the weight of the shoe. Thus, the load which has to be carried by the user of the shoe is reduced and hence the wearing comfort of the shoe is additionally increased. Moreover, due to the reduced weight, in the case of a sports shoe, an improved performance of the user of the shoe can be achieved since he can act more explosively and tires less quickly.

Depending on the specific function or usage of the shoe, e.g. for different types of sports, on different surfaces, for different shapes of feet or running types, further and/or other specific zones requiring stability/flexibility as the ones shown in Fig. 1 may be at hand. Finally, alternatively or in addition to dividing the shoe into zones of different stability/flexibility as in the above example 100, shoes may also be divided into zones by means of a variety of further features. For example, zones with varying stiction of the surface, with varying breathability or with varying cushioning, different water- and wind resistance properties, varying abrasion resistance or varying cut resistance, etc. may be required. By correspondingly adapting the properties of the different zones to the actually desired properties, the functionality of a shoe can be improved.

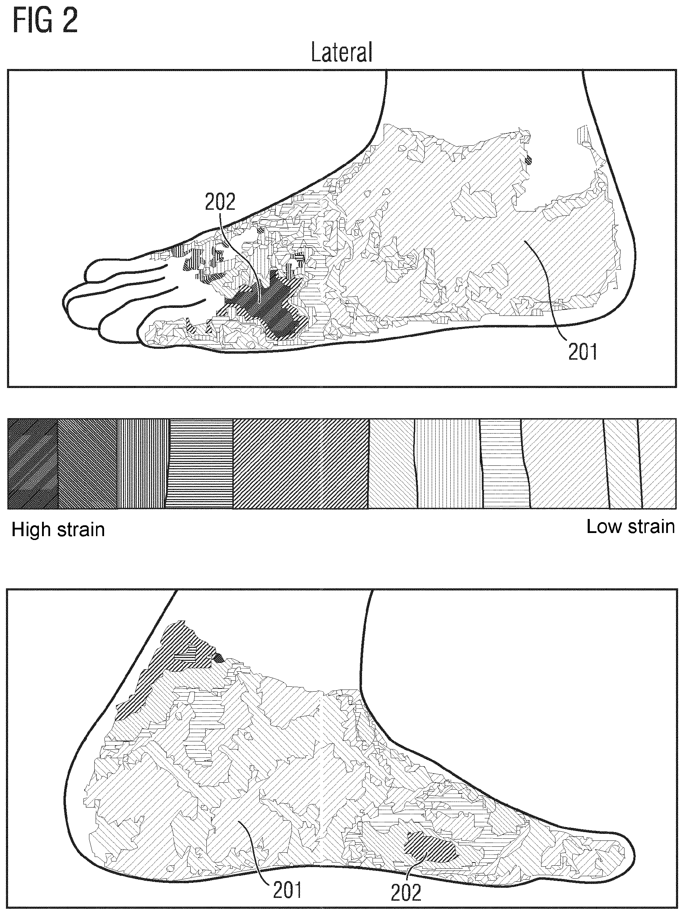

Figure 2 shows an example for a detailed analysis of different zones of a foot. In particular, the local strain of the foot at the surface of the foot, i.e. the skin, when running barefooted is illustrated graphically. It can be seen that when running barefooted, an increased strain of the foot occurs in zone 202 between the toe bones and the metatarsals, in medial as well as in lateral direction. However, for example in the zone of ankle 201, only low strain occurs.

The zones of a shoe in which only low strain of the foot is to be expected can for example be embodied with increased strength in order to stabilize the foot and thus to prevent the foot from rubbing or sliding in the shoe. In the context of this application, strength or stiffness is characterized by how much a material is deformed when a specific force acts on the material. For example, the tensile strength of a first material with a length l₁, which extends by Δl₁ when a tensile force acts upon the material along the direction of the length l₁ is characterized by the relative extension Δl₁/l₁. If the relative extension for an identical force is lower, the tensile strength of a material is higher. Thus, in zones of higher strength, the shoe is deformed to a lesser extent such that the foot is stabilized, there.

However, in order to provide a pleasant feeling during running with the shoe, the zones in which, according to Fig. 2, higher strain of the foot is to be expected, should correspondingly be embodied elastically and, in fact, according to the expected degree of strain. This is for instance the case in zones 202. Furthermore, this area of the instep should be elastically to allow for adaptation to various shapes of feet and instep heights and to alleviate putting on the shoe.

Elastic material is characterized by essentially reverting to the original state after the application of a force and a corresponding deformation. Thus, the material deforms reversibly and not permanently. Therein, elastic materials can provide different restoring forces. If the elastic restoring force provided by the material is larger, the material will deform to a lesser extent when a particular external force is applied. The higher the external tensile force which is necessary to achieve various relative extensions Δl1/l1, the higher the tensile strength of the material. In general, an elastic material has a higher strength if it comprises larger restoring forces. This means that if the foot extends in a particular zone, the corresponding extension of the material is determined by the size of the elastic restoring forces which occur in that region. By means of reduced restoring forces, i.e. larger stretchability, the wearing comfort associated with such a zone can be increased.

Similar profiles of different functional requirements in different zones may not only be obtained for running, as shown in Fig. 2, but also for other types of sports. For example, profiles for the force transfer during cycling may be determined. In a further aspect, different zones of a football shoe which typically are used for particular actions, for example passing or dribbling, may be determined. Correspondingly, in addition to running shoes, for example also cycling shoes, basketball shoes or football shoes with special zones of specific functionalities may be designed.

By means of the present invention, shoes, in particular sports shoes, may be provided according to the different requirements in different zones of a shoe in a particularly advantageous manner, via directly printing a functional second layer on a first layer for a portion of the shoe.

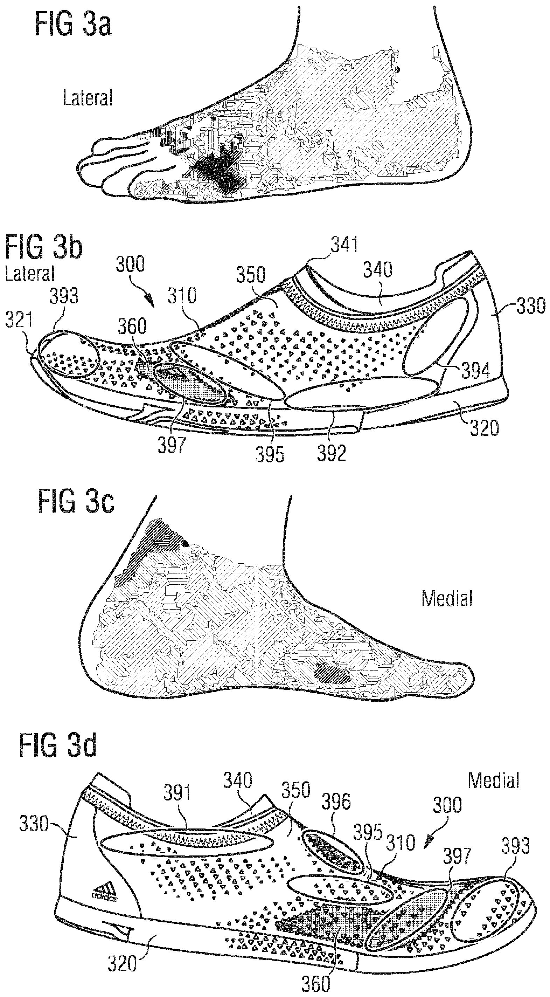

Figures 3b, 3d show a first embodiment of a shoe 300 according to the present invention. The embodiment includes a portion 310 comprising a first layer 360 and a functional second layer 350, wherein the functional second layer is printed on the first layer. The portion 310 is adapted such that it meets the requirements relating to flexibility and/or stability during running according to Figs. 3a, 3c in an optimized manner. The portion 310 essentially comprises the complete upper of shoe 300 besides the heel area 330. In other embodiments the portion 310 may comprise a larger or smaller area of the upper. In one embodiment the portion 310 also comprises the heel area 330. In another embodiment the portion 310 comprises the complete upper of the shoe 300. Moreover, the example 300 also includes a sole 320, a heel section 330 and a collar 340.

In various embodiments, the first layer can be manufactured from woven or non-woven material, e.g., weft knit or warp knit. It can comprise one or more sub-layers of material. Preferably, it only comprises one sub-layer. In a preferred embodiment, the first layer is elastic or breathable. In a particularly preferred embodiment, the first layer is elastic and breathable. The first layer can also be characterized by very large elastic restoring forces.

In an embodiment which comprises an elastic first layer, the first layer is adapted such that, when a force is applied parallel to the plane of the layer, the extension of the first layer is independent from the direction of the force and only depends on the modulus of the force, i.e. the first layer is isotropically elastic. In another embodiment with an elastic first layer, the aforementioned extension of the first layer additionally depends on the direction of the force, i.e. the first layer is anisotropically elastic.

In a preferred embodiment, the first layer consists of polyester woven mesh. The polyester woven mesh is elastically stretchable and air-permeable. In an embodiment, the polyester woven mesh is isotropically elastic. In another embodiment, the polyester woven mesh is anisotropically elastic. For example, the extension in a first direction of the mesh, when a predetermined force is applied along the first direction of the mesh, can be larger than the extension in a second direction of the mesh when the same predetermined force is applied along the second direction of the mesh. The anisotropy may be caused by the structure of the mesh. For example, the elasticity in warp (longitudinal direction) may be different to the elasticity in weft (transverse direction). In one embodiment, the elastic first layer can be adapted such that it is characterized by increased stretchability in longitudinal direction of the shoe, e.g. referring to Fig. 3b, from the tip of the collar 341 in the direction of the tip of the shoe 321. In some embodiments, thus, a particularly good fit of the shoe can be achieved.

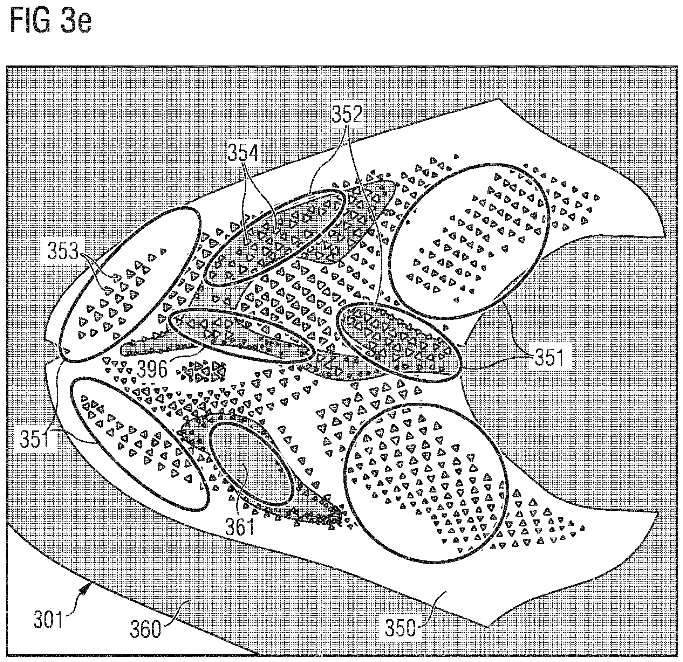

Figure 3e shows a work piece 301 which is manufactured by printing a functional second layer 350 on a first layer 360. A portion 310 of a shoe 300 as shown in Figs. 3b, 3d, may be manufactured from the work piece 301.

In one embodiment, the second layer is elastic. The second layer therefore changes the elasticity of the printed portion. As an example, the second layer increases the tensile strength of the portion. In a preferred embodiment, the second layer may comprise larger elastic restoring forces than the first layer.

The second layer can be printed by means of arbitrary printable substances which allow a functional second layer. In an embodiment, the printed second layer contains rubber. In another embodiment, the printed second layer contains silicon. In a further embodiment, the printed second layer contains polyurethane.

In a preferred embodiment, the second layer contains a poly-THF-based polyurethane dispersion which is known from WO 2010/142393 and manufactured by the company Bayer. This dispersion is well-suited for precise printing on shoes as will be described in the following. Moreover, the printed polyurethane layers of that type are characterized by special elastic properties, e.g. by large elastic restoring forces. Already by means of thin printed layers from this material, the elastic restoring forces of different first layers can be increased such that they are suitable as material to form an upper of a sports shoe. In embodiments in which the first layer consists of polyester, the elasticity of the portion, at least in printed zones, is essentially determined by the printed functional second layer. The elastic properties of such a portion are explained in more detail in the following.

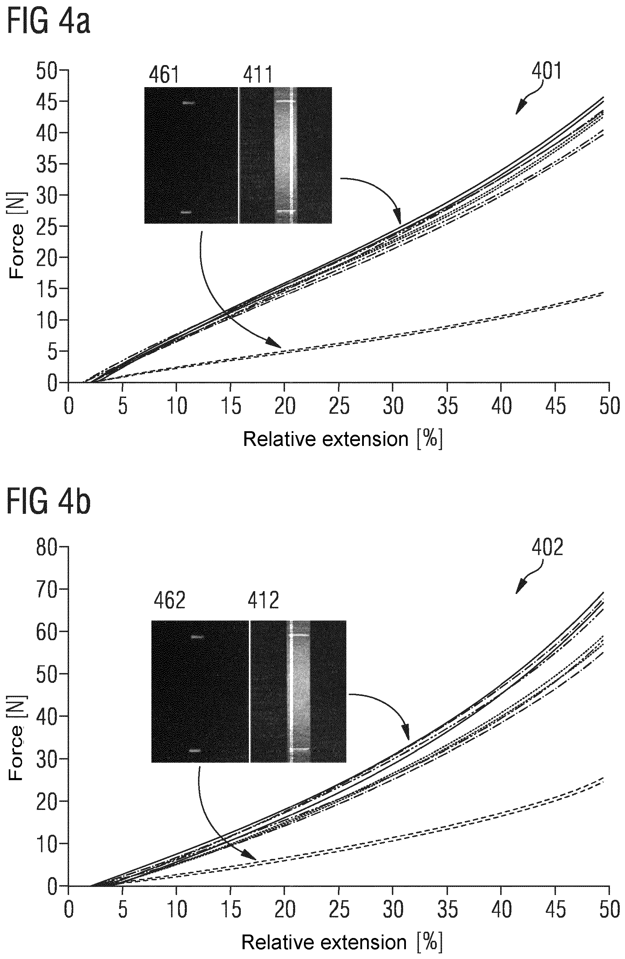

Figures 4a and 4b, respectively, show force-strain diagrams 401 and 402, respectively, for comparative samples 461 and 462, respectively, which only comprise a first layer of polyester. The samples 461 and 462 comprise a length of 10 cm and a width of 6 cm, wherein the portions 461 and 462 extend along the warp and the weft of the mesh, respectively. The force-strain diagrams illustrate the tensile force which is required for a specific relative elongation in longitudinal direction. The comparison of Figures 4a and 4b shows that the samples comprise a higher tensile strength in weft direction of the mesh of the first layer than in warp direction. Thus, the respective sample is anisotropically elastic. As can be seen from Figures 4a and 4b, the samples 461 and 462 can be stretched very far. A relative stretch of 50% is achieved for forces in the range of 20-25 N in weft direction and in warp direction already for forces of 10-15 N.

Moreover, Figures 4a and 4b show force-strain curves for portions 411 and 412, respectively, which comprise a first layer of polyester and six directly printed layers made of poly-THF-based polyurethane dispersion. Therein, the dispersion is admixed with 2% methylene diphenyl diisocyanate (Desmodur^{®}, a cross-linking agent sold by the company Bayer MaterialScience). The portions 411 and 412 just as the samples 461 and 462 comprise, respectively, a length of 10 cm and a width of 6 cm. In the portions 411 and 412, the first layer is printed each with six functional layers each having a width of 6 cm, wherein the layers extend centrally along the portions and are printed on top of each other. The portions 411 and 412 are printed along the warp and the weft, respectively, of the mesh of the first layer. To this end, the mesh was rotated by 90°. As can be seen from Fig. 4a-b, the portions 411 and 412 are strongly elastically tensile. They may be elastically strained up to 50%. In order to achieve a relative strain of 50%, a tensile force in the range of 35-50 N (warp, Fig. 4a) and of 55-70 N (weft, Fig. 4b) has to be applied, respectively. It is further possible to create an anisotropic elasticity for area-wide printed portions. A comparison with the curves of the first layers which are not printed, i.e., the samples 461 and 462, shows that the functional layer strongly increases the tensile strength. Only one sixth of the area of the portion is printed, but nevertheless the tensile strength is increased by a factor of four (Fig. 4a) and by a factor of three (Fig. 4b), respectively. Such a large tensile strength is suitable to absorb the strong forces which may occur in a shoe.

Portions 412 and 411 depicted in Figures 4a and 4b show slightly different measured curves which relate to portions comprising functional layers having different admixtures of color pigments. In one embodiment, the poly-THF-based polyurethane dispersion is admixed with 2% of color pigments. In another embodiment, 10% of color pigments are admixed. Figures 4a and 4b show that admixing of different fractions of color pigments have only minor impact on the tensile strength of the created functional layers. Thus, on the one hand it is possible to choose the admixture of the color pigments essentially independent from the desired tensile strength. On the other hand it is possible to precisely control the tensile strength of the printed layers. This is explained in more detail by the following methods (e.g., changing the geometry or the thickness of the layer).

The Figures 4a and 4b are merely examples for an embodiment of a portion. Other embodiments may comprise higher or lower tensile strengths. As will be explained in more detail below, e.g., the thickness of one or more printed functional layer(s) may be varied in order to vary the tensile strength of the portion. Moreover, the portion of the first layer which is functionally printed could, e.g., be precisely controlled by isolated layer areas or gaps. These two variations allow for adapting the tensile strength of the portion nearly continuously to the value given by the minimum value of the elastic first layer. By printing several layers, the tensile strength may also be increased.

In another embodiment the tensile strength of a portion which comprises one or more printed functional layers, may be formed such that for an elastic strain of the portion of 50% a force of 10-100 N has to be applied over a width of 1 cm. Preferably, the required tensile force is in the range of 30-60 N.

In another embodiment the tensile strength of the portion is at least doubled when compared to the first layer which is not printed. In a preferred embodiment the tensile strength is increased at least five times. In a particularly preferred embodiment, the tensile strength is increased by a factor of 10.

In addition, in one embodiment, the elasticity of the printed portion, at least up to a relative extension of 30 %, preferably up to a relative extension of 50 %, is essentially linear, e.g. the relative extension is directly proportional to the applied force. The curves shown in Fig. 4a and 4b are characterized, e.g., by a linearity of 50% and 40%, respectively, in terms of relative extension. In an embodiment, this linearity can be used to provide a shoe with improved wearing comfort. According to the exact shape and size of the foot, the elastic portion which comprises the elastic second layer adapts to the foot of the user. Thus, it expands and, in fact, to a varying extent in various regions. Due to the linearity of the elasticity of the second layer which has been described above, however, the further deformation, for example caused by an impact during running, is independent from the extent to which the second layer has already been stretched. Thus, the additional extension caused by a particular additional force is always of the same size - independent from the extension which has already been caused by the adaptation to the foot of the user of the shoe. Thus, the different regions which have adapted to the foot of the user, i.e. stretched, to a varying extent still exhibit the same desired original elasticity. Due to its linearity, the elasticity of the elastic portion can therefore simultaneously be optimized for the various possible exact shapes and sizes of a foot.

The printed second elastic layer made of poly-THF-based polyurethane dispersion is further characterized by its durability. On the one hand, the elasticity of the layer is maintained permanently despite the strong strain of up to 50% and without tearing, deformation or losing its properties in other ways. In a preferred embodiment, the functionally printed portion returns into its original state even after multiple relative strain of 50% as soon as the application of force is stopped. Thereby, an undesired widening of the printed portions can be avoided. On the other hand, also the degree of elasticity can generally be maintained. After a first strain, the relative strain also essentially shows the same characteristics after several relative strains of 50%. Thus, all properties in terms of elasticity are permanently preserved. In this way, wearing out of the second layer is prevented. In one embodiment of the mentioned shoe, wearing out of the portion is avoided.

In addition to the particular mechanical properties, the printed second layers made from poly-THF-based polyurethane dispersion comprise various further advantages. Portions printed with a second layer made from poly-THF-based polyurethane dispersion may endure washing processes without significant loss of functionality. This causes a particular longevity of the portions and thus of the correspondingly embodied uppers.

In addition, the poly-THF-based polyurethane dispersion is water-based. Thus, the use of solvents for printing, which are expensive and in addition harmful to the environment or hazardous to the health, can be eliminated. Therefore, a more cost-effective, environmentally friendly and less toxic manufacturing process can be achieved. In addition, elaborately washing the portion after printing the second layer is unnecessary.

Further, color pigments may easily be added to the layers of poly-THF-based polyurethane dispersion. Thus, first layers may be printed with second layers comprising a variety of colors. Moreover, both matt and high-gloss second layers can be realized. Thus, the portion can be embodied with a functional second layer which additionally comprises a desired optical appearance.

In addition, the layers of poly-THF-based polyurethane dispersion comprise a fine granularity. Therefore, the surfaces are particularly even and smooth such that an improved haptic feeling can be achieved and also multiple printing of several layers on top of each other can be carried out. By using a liquid dispersion, coarseness and microstructure are particularly advantageous.

The printing of a functional second layer on a first layer for a portion of a shoe according to the present invention comprises arbitrary printing methods. Preferably, the functional second layer is directly printed on the first layer. Then, no additional waste such as the transfer layer of transfer printing methods occurs. Moreover, the fabrication step of transferring can be eliminated and thus the production can be carried more quickly and efficiently. Moreover, possible defects or imprecisions that could occur at the transferring process are avoided.

In a preferred embodiment, the second layer is printed from poly-THF-based polyurethane dispersion, to which 1%-5% Desmodur is added. Particularly preferred is an addition of 2%. In a preferred embodiment, the poly-THF-based polyurethane dispersion that is used for printing comprises a viscosity in the range from 2000 mPa.s to 3500 mPa.s. Particularly preferred is a viscosity of approximately 2800 mPa.s. Due to this viscosity, the dispersion is particularly suitable for use as printing substance.

In a preferred embodiment, the functional second layer is printed by means of a screen printing method. Particularly preferred, an automated screen printing method is used. To this end, the printing agent is pressed through a finely woven printing mesh. The mesh is made larger or smaller in different areas depending on the layer which is supposed to be printed such that more or less of the agent or no agent at all penetrates the mesh. Thus, layers with variable thicknesses, but also fine structures may be printed. Screen printing methods are characterized by the fact that in particular when large lot sizes are used, cost-effective production can be achieved.

In an embodiment, the first layer is heated to 150° C for three minutes prior to the printing in order to pre-shrink the first layer. Alternatively or additionally, the pattern of the material used for the upper is selected to be one size too small for the last which it is intended for, in order to provide a pre-strained upper. The printed functional second layer can, in an embodiment, consist of one or more sub-layers. In an embodiment in which the second layer comprises several sub-layers, the individual sub-layers are dried after each single print in a flash dryer. The duration of the drying process, in an embodiment, is about ten seconds. After the last sub-layers required for a functional second layer has been printed, preferably a further flash drying process is not carried out. Instead, the functional second layer is now preferably cured. In an embodiment, the second layer is cured at about 140° C for about six minutes. The thickness of the layer and the number of sub-layers may modify the functionality, e.g. the elasticity of the second layer. Moreover, the elastic properties of the printed layer may be controlled by varying the parameters used for curing.

In a further preferred embodiment, the second layer is directly printed by means of a rotation printing method or an automated rotation printing method. In a further preferred embodiment, the second layer is directly printed by means of an ink-jet printing method. In other embodiments the second layer can be directly printed with a meltable plastic granulate. Then, the granulate may be melted.

The printing enables a particularly advantageous design and manufacturing process of the functional second layer. The printing enables a particular precision when embodying the second layer.

The thickness of the layer can be controlled very accurately. In particular, also very thin layers may be printed such that the weight of the corresponding shoes is minimized. By means of printing several sub-layers, the thickness of the second layer can be varied, wherein the production process has to be changed only slightly. This enables a particularly cost-effective production of shoes with different functionalities.

Also, the lateral precision of the printing process is very high. Thus, also small structures or structures with low distances from each other can be manufactured advantageously. In total, this results in a high degree of design freedom with respect to the realization of the portion of the shoe.

Furthermore, printing methods can have a high degree of automation. Moreover, no excess or waste material is produced. Also, printing methods enable a high degree of flexibility. For example, the design of the second layer can be changed without large modifications in the production process. Only a new printing pattern, e.g. in electronic form, has to be produced. No further steps in the production process have to be changed. In particular, the first layer does not have to be adapted. Thus, a particularly cost-effective production is enabled. Moreover, this flexibility even allows a customized production. For example, shoes adapted to individual customers may thus be manufactured in a cost-effective way. For example, the functional second layer of the portion of the shoe can be adjusted to the particular needs of individual customers. This could even be done in a local store depending on the availability of a suitable printer. Only a different printing pattern or maybe even only a different thickness of the layer, e.g. according to the weight of the customer, has to be printed on the first layer. Using printing methods, this can be carried out without particular efforts such that each manufactured portion may carry an individual second layer.

Further, by means of the printing, the second layer can be deposited on the first layer at room temperature. This allows a simple, safe, less error-prone and less energy consuming production.

In an embodiment, the second layer is only arranged in selected zones of the portion. Zones at which the second layer is arranged comprise at least one modified mechanical property.

Moreover, in an embodiment, the second layer may be more or less breathable than the first layer. In an embodiment, the breathability of the portion in those zones, in which the second layer is arranged, is lowered. In another embodiment, the breathability of the portion is increased in those zones in which the second layer is not arranged.

Figure 3e shows a preferred embodiment which is optimized for the activity of running. Here, the second layer provides larger elastic restoring forces than the first layer and it is only arranged in selected zones 352. The first layer is breathable. The work piece 301 comprises several zones 361 in which the second layer is not required and thus not arranged, in order to reduce weight and costs of the material. In particular, zones 361 may thus be provided with increased tensile strength. Particularly preferably, the zones 361 are arranged in the area of the instep 396, where a flexible adaptation to the specific shape of the foot is desired. Moreover, zones 361 preferably are arranged in the area 397 between toe joints and the midfoot joints where an increased flexibility for supporting flexing of the foot is advantageous.

As illustrated in Fig. 3e, the functional second layer can be deposited essentially area-wide in zones 351. In such zones 351, the elasticity of the portion is essentially determined by the elasticity of the second layer. Thus, the strength is increased and increased stability is provided. The zones 351 are correspondingly preferably located at positions where an increased stability is desired. As can be seen from Figs. 3e, 3b and 3d, this is for example the case in zones 392 which are directly adjacent to the sole 320 or in zones 391 which are directly adjacent to the collar 340. Furthermore, such zones may be arranged in the toe area 393 or in the heel area 394 or in the area of the lateral and medial midfoot joint 395. Extended regions have for example characteristic dimensions of 1-10 cm. However, the design of the zones may be versatile and Fig. 3b, 3d, 3e merely show examples thereof.

By including gaps 353, the strength of such zones 351 can be reduced in a deterministic manner. The strength is reduced as the area comprised by the gaps 353 is increased. Thus, the elasticity of the second layer can be locally modified deterministically and gradually such that an optimized adjustment to the respective desired profile of requirements is enabled. Moreover, the material which is needed to form the second layer can be reduced to a minimum due to the fact that it can be deposited deterministically and locally and does not have to be deposited completely area-wide. A shoe with correspondingly improved adjusted functionality will thus eventually even be lighter and cheaper.

The printing of the second layer is advantageous, since it allows realizing small gaps 353. For smaller minimum gap sizes, more even transitions can be realized since the difference between the maximum elastic tensile strength of an area-wide layer and the next possible lower elastic tensile strength of a layer with the smallest gap size is smaller. In the embodiment 301, the gaps 353 have typical dimensions of 1 mm. Preferably, at least one gap has dimensions of less than 1 mm. However, in this embodiment also gaps 353 are realized which comprise dimensions smaller than 0.5 mm. By means of this particularly small gap size, the tensile strength of the second layer can be lowered with respect to its maximum value in a particularly smooth manner.

Further, the printing enables the realization of gaps 353 in special shapes without being limited by the type of the production method. Gaps 353 can be realized in round, triangular, quadratic, parallelogram-like, trapezoid-like, rectangular or polygonal shapes. Depending on the characteristics of the loading which is to be expected, different shapes may be advantageous. In an embodiment, the shape of the gaps can be adapted to the expected force lines. For example, the gaps can be realized such that the edges of the gaps are arranged preferably parallel to the occurring forces. Thus, the effect and the lifetime of the second layer can be additionally increased.

By means of incorporating gaps 353 into the second layer, in addition, the breathability of the portion can be increased.

Referring to Fig. 3e, the zones can also comprise several isolated areas 354 in zones 352. In particular, these zones can be selected according to the mechanical loading which occurs when using the shoe. If the isolated areas 354 are arranged more densely, the restoring force which occurs in the respective zone 352 is stronger and thus the tensile strength is increased. Zones which require lower restoring forces may accordingly be entirely free from the functional second layer. The zones 352 with isolated areas 354 enable particularly advantageous gradual transitions between zones without second layer and zones 351 with area-wide second layer, potentially comprising gaps 353.

In the work piece 301, isolated layer areas 354 typically comprise dimensions of 1 mm to 2 mm. However, the embodiment 301 also comprises isolated layer areas with dimensions smaller than 0.5 mm. Another embodiment can comprise isolated layer areas with dimensions ranging from 0.5 mm to 2 mm. In a further embodiment, isolated layer areas which have a dimension that is smaller than 0.5 mm may be used exclusively. Depositing such small isolated layer areas is enabled by means of printing. The distances between isolated areas typically comprise around 2 mm. In particular, the distances may also be smaller than 2 mm, preferably smaller than 1 mm. However, also arbitrarily large distances may be used. As explained above, in the context of the gaps 353, also the isolated layer areas 354 may be realized using arbitrary shapes and may thus be adapted to the characteristics of the force lines.

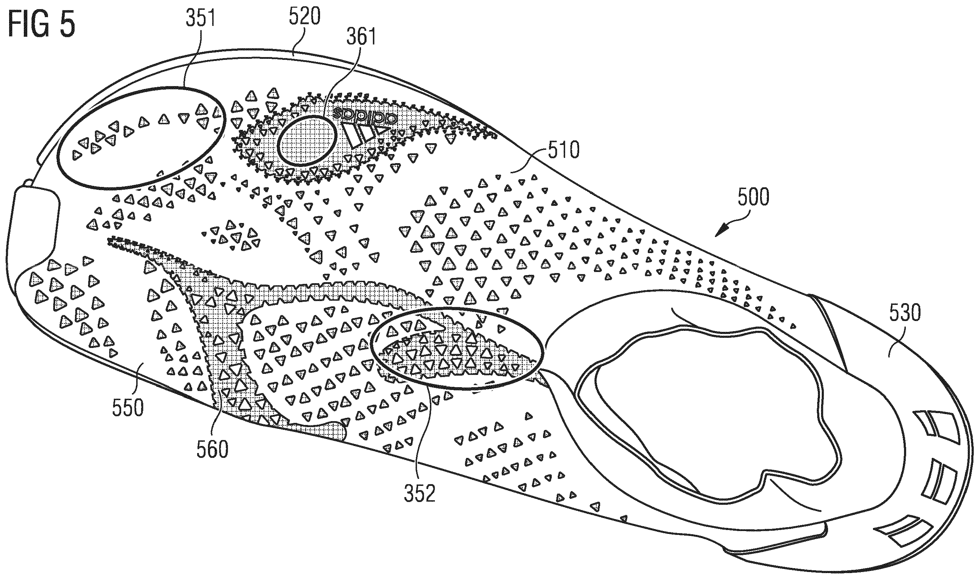

The embodiment 500 which is illustrated in Fig. 5 comprises, in addition to the portion 510, also a heel section 530 and a sole 520. However, also a variety of other embodiments is possible. Other embodiments may be realized without or only with selected ones of the aforementioned parts. However, further embodiments can also comprise further parts, such as a shoe-lace section or hook-and-loop fasteners or an enforced collar 340. In a further embodiment, the upper of the shoe is perforated. Thus, the weight of the shoe can be further reduced and its breathability can be further increased.

In the embodiment 500 of Fig. 5, the portion 510 essentially comprises the entire upper of the shoe 500, except for the heel section 530. In other embodiments, the portion 510 can comprise other parts of the upper. Further embodiments relate to other sports shoes, for example, football shoes, wherein the second layer is arranged on the first layer such that the elasticity of the portion is modified according to the typical loading which occurs in the specific sports type, e.g. playing football.

The printed functional second layer can comprise various thicknesses in various embodiments. The thickness of the layer can easily be varied by means of printing methods. Thus, the degree of functionality of the second layer, e.g. its elasticity, may be varied by means of the thickness of the layer such that the layer can be adjusted e.g. to varying body weights. Furthermore, the thickness can be varied within different zones of a portion within a single embodiment, such that the functionalities of the portion are modified gradually. For example, with a gradual modification of the elasticity by means of varying thickness of the layer in different zones, unpleasing bruises may be eliminated, since sudden changes of the elasticity are avoided.

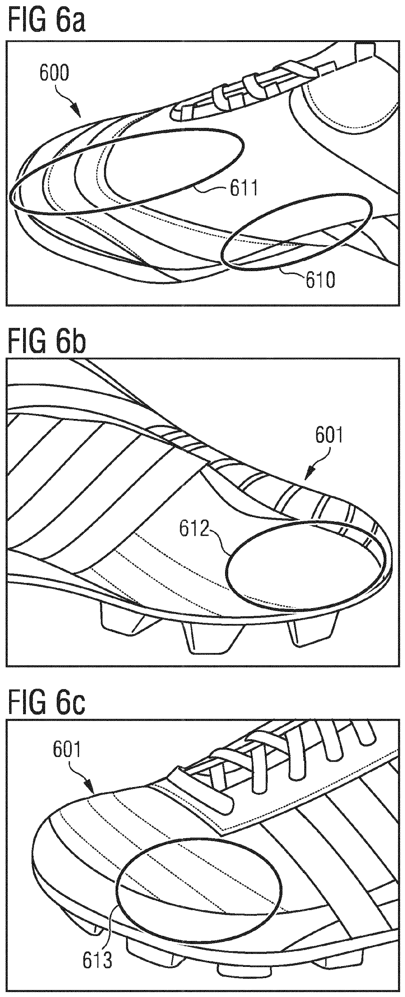

Fig. 6a-c show embodiments 600 and 601 of a football shoe having different functional zones. In one embodiment, e.g., zones of a football shoe particularly used for the first touch, shooting at the goal, for dribbling, for crossing or for passing, may be provided with different desired functionalities.

In an embodiment, the printed second functional layer is arranged such that the cushioning is increased within a portion. Preferably, the second layer is arranged in zones which are preferably used for the first touch such that the cushioning within that area of the portion is increased. For instance, such zone 610 is preferably arranged at the medial faces of the shoe, which is often used for the first touch. Thus, the rebounding force which drives the ball away from the shoe when trying to control the ball is reduced, there. Thus, an improved control of the ball is achieved.

In a further embodiment, the functional second layer is realized elastically in the direction perpendicular to the plane of the portion. Thus, instead of cushioning the ball, in an embodiment, the force transmission between the ball and the foot can be increased by means of the elasticity perpendicular to the plane of the portion, such that more powerful shots can be achieved. This is particularly advantageous in zones which are preferably used for shooting at the goal, such as for example in the zone 611 in Fig. 6a.

In a further preferred embodiment, the stiction of the portion is modified by means of the second layer. Thus, selected zones can be adjusted such that their stiction properties are optimized according to their intended use. In an embodiment, for example the various zones of a football shoe which where specified above may be provided with different stiction. These comprise the lateral instep zones which are preferably used for carrying out crosses. Fig. 6b shows a football shoe 601 having such zone 612. There, the increased stiction enables an improved control of a cross, for example with more spin. Also, zones around the tip of the shoe which are preferably used for dribbling may be provided with increased stiction such that the ball may be handled in an improved manner. Preferably such zone 613 is arranged around the tip of the shoe. Such zone 613 can, e.g., be seen in the football shoe of Fig. 6c. On the other hand, zones 611 which are preferably used for powerful shots may be provided with reduced stiction in order to achieve a better force transmission.

The functionalities of the printed second layer mentioned with reference to a football shoe may also be used for a wide variety of different types of shoes.

Besides the mechanical properties already mentioned, the printed second layer may change a wide variety of other mechanical properties of the portion. For instance, the elasticity, the cushioning, the stiction, the abrasion resistance, the cut resistance, the wind resistance or the water resistance of the portion may be changed. In this way it is possible to provide a wide variety of different functionalities.

In an embodiment, several functional layers may be printed. The different printed functional layers may be made of different materials. In this way, the above-mentioned different functionalities may be easily combined.

In an embodiment, one printed functional layer could, e.g., control the elasticity of the portion, while a further printed functional layer controls the cushioning and another printed functional layer controls the stiction. Other embodiments may provide only part of the above mentioned and / or additional functionalities by the printed layer(s). Moreover, the respective layers could comprise different or the same colors. Thereby, a specific functional portion could also be combined with a specific optical appearance.

On the one hand, the multiple printing and thus the advantages arising thereof are enabled by means of the printing method, i.e., by depositing essentially flat and thin layers. In this context, the usage of printable, highly functional material which provides the functionality, e.g. elastic strength, required for a shoe, even when formed as a thin layer, is particularly advantageous. In preferred embodiments, a printed functional layer and possibly a transition between the printed functional layer and a zone of the first layer which is not printed on is sufficiently flat, such that a further continuous printing thereon is possible. In an embodiment, the printed functional layers comprise a total thickness ranging from 0.03 mm to 1 mm. Preferably, the total thickness is less than 0.5 mm, particularly preferably the thickness is around 0.3 mm. Moreover, in preferred embodiments, the surfaces of the individual functional layers are realized such that further functional layers may be printed thereon, in particular such that further functional layers adhere to the respective layers. Thus, eventually separate, non-overlapping or partly overlapping functional layers, but also layers which are adjacent to each other or which are formed such that they fit into each other, may be printed on the first layer sequentially, on top of each other or next to each other.

By means of the printing, various functionalities can be provided in one manufacturing step. Transfer times between different machines, adapting the different machines to each other as well as correspondingly inserting and removing the work pieces are eliminated.

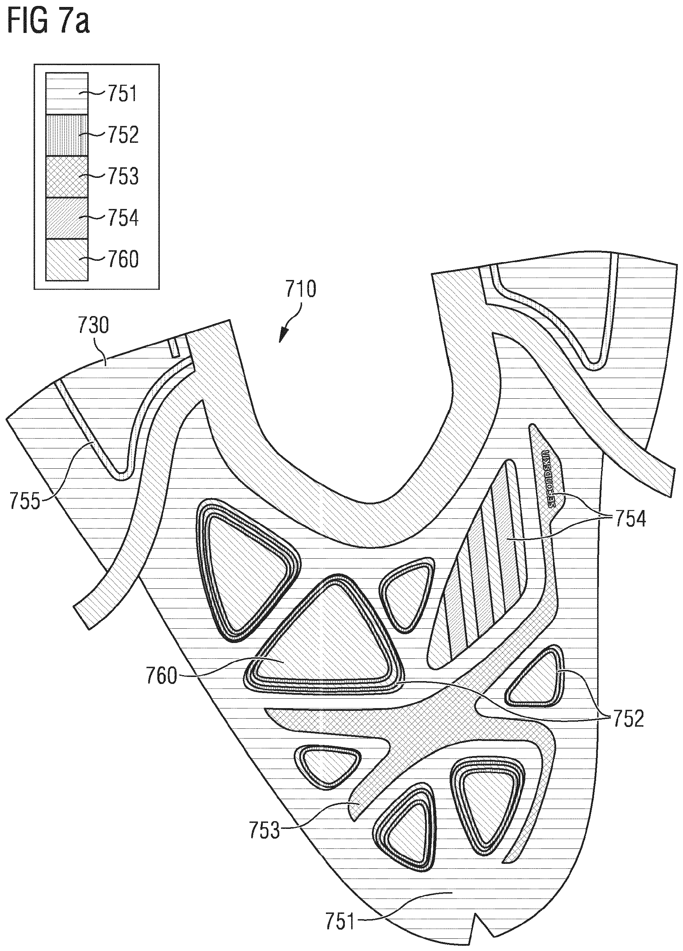

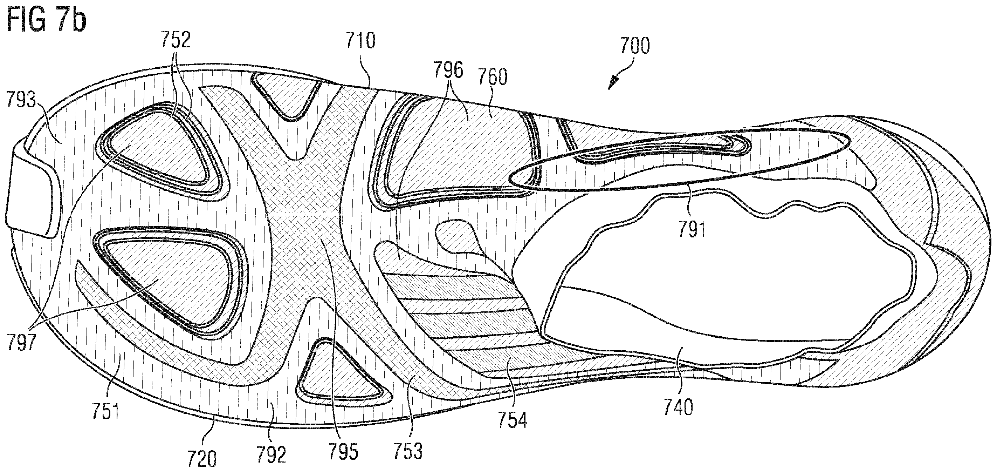

The Figures 7a-b show an embodiment 700 of a shoe with a sole 720 and a portion 710 with a first layer 760 and three functional layers751, 752, 753. The portion 710 also comprises a heel section 730 such that the latter does not have to be manufactured separately. Also, the heel section 730 is functionally printed. In particular, heel details are printed. In the embodiment 700, in particular via the second printed layer 752, a line-shaped element 755 is printed onto the heel section 730 which provides an additionally increased stability of the heel section, such that the latter does not have to be additionally enforced. More specifically, this line-shaped element stabilizes the heel section along the circumference of the shoe without constricting the heel perpendicular to this direction. In another embodiment, the heel section 730 of the portion 710 may also be enforced by means of additional elements which are arranged thereon.

The elastic functional second layer 751 is arranged area-wide at zones 791 around collar 740 as well as in zones 792 around sole 720 and in zones 793 in the toe area. Thereby, the stability of the portion 710 is increased in these zones. In zones 797 of the toe joints and on the lateral areas and the instep zone 796 of the shoe, the functional second layer 752 is punctuated, in order to support the flexing movement of the foot and to improve the adaptation of the portion to the foot.

In the respective transition areas of the zones which are fully printed with the second layer 752 and the zones of the first layer 760 which are not printed, the functional third layer is arranged. This layer contributes to a continuous transition between the zones.

The functional fourth layer 753 is arranged from the lateral to the medial midfoot joints and provides for an improved stability in this zone of the portion. The additionally printed layer 754 further provides for a desired optical appearance.

In a further embodiment, the respective functional layers 751, 752, 753 may change different mechanical properties of the portion. In particular, they can be made of different materials or comprise different thicknesses. In a further embodiment, the portion 710 only comprises one of the layers 751, 752, 753, 754 or layers selected therefrom or additional functional layers.

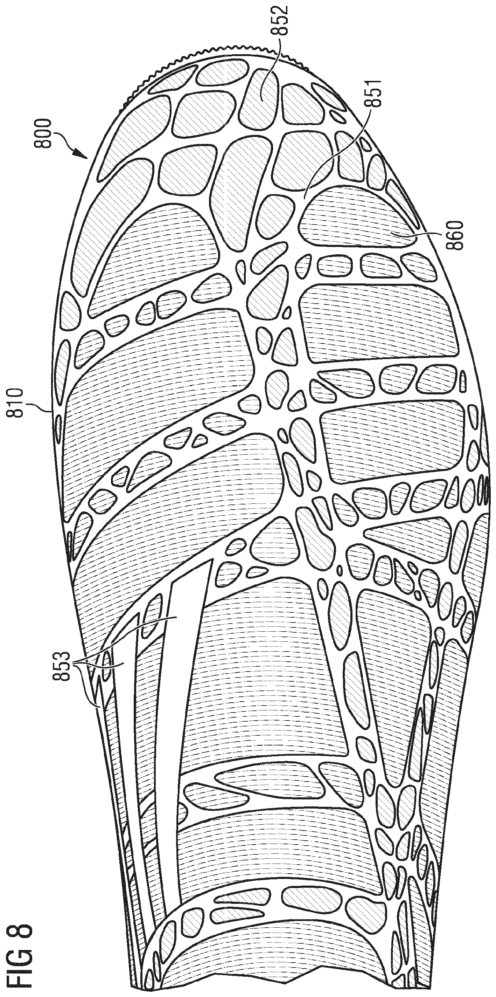

Figure 8 shows a further embodiment 800 of a shoe. The shoe comprises a portion 810 with a first layer 860 and several printed functional layers. An elastic second layer 851 is printed with line-shaped structures which correspond to the main force lines of the loading which occurs during usage. Moreover, the second layer 851 is printed in zones adjacent to the sole and the collar. The zones of the functional second layer 851 are, according to the desired tensile strength, provided with gaps which can comprise various shapes. Along the two lines which extend along the longitudinal direction of the shoe and in the zones, which are adjacent to the collar or the sole, a further elastic layer 852 is printed, exactly filling the gaps of the layer 851. This leads to a continuous elastic layer in the aforementioned zones in order to provide an increased stability, there. In the embodiment 800, the layer 852 comprises a different color than the layer 851. Moreover, the shape of the layer 852 is exactly adapted to the gaps of the layer 851. Thus, a desired optical impression can be achieved, in particular the impression of multi-color areas and/or lines. In addition, the embodiment 800 is printed with a further layer 853.

The functional layers 891, 892 may be adjusted to each other such that a layer comprises a predetermined global functionality of all layers. By means of several layers, the functionality of the shoe can thus be optimized, wherein at the same time a predetermined optical impression may be realized. The materials used for the various layers may comprise the same or different mechanical properties. The different layers may comprise the same or different thicknesses.

In the above embodiments 700 and 800, it was shown that by means of printing one or more functional layers on the first layer, essentially an entire upper of a shoe may be manufactured, wherein several functionalities can be taken into account and a variety of desired optical impressions can be realized. The printing of functional layers on a first layer can, however, also be realized such that it can be combined with other manufacturing methods. For example, the printing may be combined with depositing coatings, for example having additional water proofing effects.

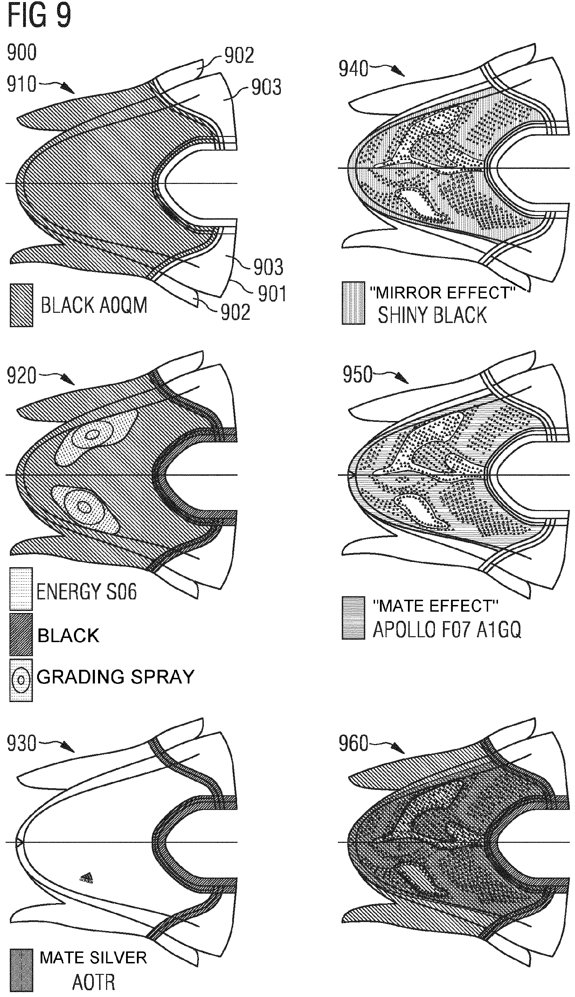

Figure 9 shows the various layers during the course of printing 900 of a portion 901 of a shoe with four printed layers. The portion 901 comprises heel sections 903 and sections 902 which are predetermined for attaching the portion to a sole. In step 910, a black ground layer is printed. The first black printed layer is sprayed with a grading spray in step 920. The properties of the surfaces of the printed layers allow both spraying on these surfaces and further printing on sprayed surfaces. In step 930, a further element for achieving a desired optical appearance is printed. This element is, in particular, printed on the zone which has been sprayed in step 920. In step 940, a black high-gloss layer with a first pattern is printed. In step 950, finally, a functional layer is printed which comprises an increased elastic strength. The layer is printed with a second pattern, the boundaries of which are slightly decreased compared to the first pattern of step 940. Preferably, the boundaries of the second pattern in step 950 are located about 1 mm within the boundaries of the first pattern of step 940. Thus, the high gloss layer can be seen beneath the functional layer. Thus, a three-dimensional optical appearance of the different printed zones may be achieved.

In addition to the combination with a grading spray, the functional printing may also be combined with other production methods. In one embodiment a portion of an upper of a shoe comprises a first layer which is provided with an elastic element, e.g., a stripe of thermoplastic elastomer (TPU). In a further production step, the first layer is additionally functionally printed. Thereby, known production methods for elastic elements may be combined with the advantages of functional printing. In one embodiment, an elastic element, e.g., a TPU stripe is printed with one or several functional layers. Thereby, the elasticity of the elastic element may be specifically and locally modified. Moreover, the elasticity of the portion may be varied locally, even in zones to which an elastic element has already been attached. Alternatively, or additionally, other mechanical properties of the portion may be changed in zones which already have an elastic element attached thereto, as well as in zones which do not comprise an elastic element. In this context, regular upper materials (mesh, textiles, leather, etc.) may additionally be attached on the sock like upper (e.g. external toe caps, a heel cap or medial/lateral stiffening elements which are connected to the lacing and may be fastened by means of the lacing).

In an embodiment, also one or more elastic elements may be arranged on the portion. This embodiment could also, as already explained, be advantageously combined with functional printing. In particular, by printing one or several area-wide functional layers or isolated layer regions the elasticity of the portion in zones which are in between of the elements may be provided continuously. In this way, sudden transitions between the elements could be avoided and thus smooth transitions are provided.

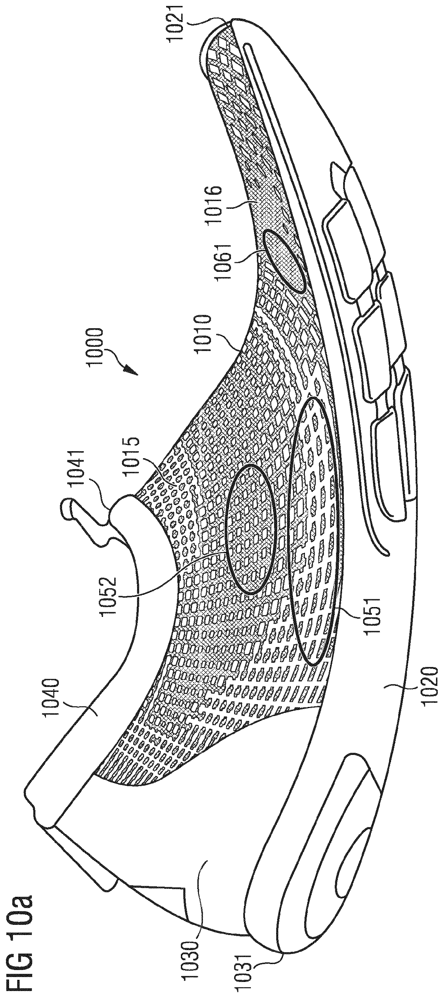

Fig. 10a-c show side, front as well as top views of further embodiments 1000 and 1001 with portions 1010 and 1011, respectively. As can be seen from Fig. 10a, the embodiment 1000 comprises a sole 1020. The upper of the shoe 1000, except for the heel section 1030 and the collar 1040, essentially consists of the portion 1010. The portion 1010 comprises a first layer 1016. The latter preferably consists of elastic polyester woven mesh. In other embodiments, also other elastic or inelastic materials may be used. The portion 1010 further comprises a printed functional second layer 1015. The latter is preferably made from elastic material. In embodiments which comprise an elastic first layer, the elastic second layer preferably exhibits larger elastic restoring forces than the first layer. The second layer can, for example, contain silicon, rubber and/or polyurethane. Especially preferably, it is made from a poly-THF-based polyurethane dispersion, such that, as already described, a second layer with particularly advantageous elastic properties can be provided.

The portion 1010 comprises at least one dimension, such that it is stretched when using the shoe 1000. The portion 1010, it leads to a bulging of the shoe 1000 from the tip of the shoe 1021 to the upper side of the heel section 1030. In preferred embodiments, the tip of the shoe 1021 is elevated by 2 - 10 cm with respect to the ground. In a particularly preferred embodiment, the tip of the shoe 1021 is elevated by about 5 - 6 cm with respect to the ground. In preferred embodiments the tip of the heel 1031 is elevated by 1 - 5 cm with respect to the ground. In a particularly preferred embodiment, the elevation of the tip of the heel 1031 is approximately given by half of the elevation of the tip of the shoe 1021.

When using the shoe, the foot of the user applies pressure against this bulging and the portion 1010 tends to stretch along the longitudinal direction such that the tip of the shoe 1021 and the tip of the heel 1031 are pressed towards the ground. Thus, the shoe 1000, in total, stretches along the longitudinal direction. The elasticity of the portion 1010 opposes this action. Thus, the portion 1010 adapts to the foot of the user such that a particular comfortable fit is achieved. If the user has a slightly longer foot, the portion 1010 and thus essentially the upper of the shoe will stretch further along the longitudinal direction of the shoe 1000. Thus, the shoe 1000 will become slightly longer in longitudinal direction such that it, in fact, adapts to the foot of the user. If, in contrast, the foot of the user is slightly shorter, than the portion 1010 will extend to a lesser extent such that the length of the shoe 1000 in longitudinal direction will be slightly smaller and, again, the shoe 1000 adapts to the length of the foot.

By printing the functional second layer 1016, a particularly good adaptation of the shoe 1000 to certain parts which should stretch to different extents can be provided. In particular, the elasticity of the portion is such that is adapts to the foot of the wearer in an optimized manner.

In a preferred embodiment, the portion 1010 is adapted such that its elasticity is anisotropic. As already mentioned, the first layer can comprise anisotropic elasticity. The latter can for example be provided by means of the structure of the mesh of the first layer. The anisotropy is preferably realized in a way such that the first layer 1016 is more stretchable in the direction from the tip of the collar 1041 to the tip of the shoe 1021 than in the direction which extends perpendicular thereto. Thus, the adjustment of the shoe 1000 to the exact length of the foot of the user, which was described above, can be improved since the shoe is thus more stretchable along the longitudinal direction. In the region of the front instep, by means of the larger tensile strength along the circumference of the shoe, at the same time a higher degree of stability can be achieved. Hence, the elastic properties in the front instep region of the portion 1010 can be optimized. Due to the shape of the portion, the axes of anisotropy provided by the first layer may however be rotated at the side faces of the shoe. For example, the direction of the mesh of the first layer which may provide the described anisotropy along the longitudinal and lateral directions of the shoe, respectively, in the instep region, may deviate from the longitudinal and lateral directions, respectively of the shoe at the side faces of the shoe. The anisotropy which is provided at the side faces may thus possibly not be ideal, or may even be undesirable, there.

By using a second elastic layer 1015, the elastic properties of the portion 1010 may also be optimized locally, for example in the instep region and simultaneously at the side faces. In a preferred embodiment, the second layer is only printed in specific zones of the first layer. These zones may be printed essentially area-wide or may comprise isolated areas. Preferably, the second layer is adapted such that the elasticity of the portion in the direction along the circumference of the shoe differs from the one in the perpendicular direction. In an embodiment, the first layer is elastic. In another embodiment, the first layer is anisotropically elastic, the second layer is characterized by larger restoring forces than the first layer and the second layer is, in addition, adapted such that the anisotropic elasticity of the first layer is adjusted to achieve a predetermined locally varying anisotropic elasticity. To this end, the areas in which the second layer is applied essentially area-wide as well as the isolated layer areas may be formed anisotropically. Thus, the functionality of the portion in a first direction can be made to differ from the functionality of the portion in a second direction. For example, an elastic layer area which comprises a larger dimension in a first direction than in a second direction may result in an increased tensile strength of the portion in the first direction compared to the second direction. By means of printing specific local structures, the anisotropy can specifically be locally adjusted.

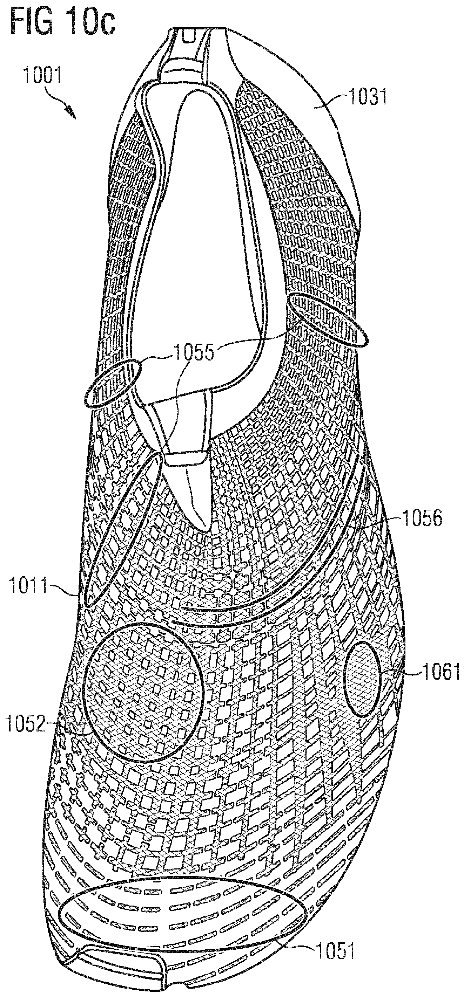

In the embodiment 1001, the second layer is arranged following a first structure, as can be seen from Fig. 10c. The structure follows lines 1055 which are arranged in a star-like manner and extend from the collar 1030 towards the sole 1020. Preferably, the width of the elements of the second layer essentially increases in the direction from the collar towards the sole. The width of the elements preferably comprises the range 2 - 12 mm. As shown in Figs. 10a, c, the second layer is applied preferably area-wide along zones adjacent to the sole 1020 or the collar 1040 since in these zones larger tensile strength is required. The extended zones may be provided with gaps, as already described in connection with other embodiments, which allow a fine control of the elasticity as well as in increase of the breathability of the portion.

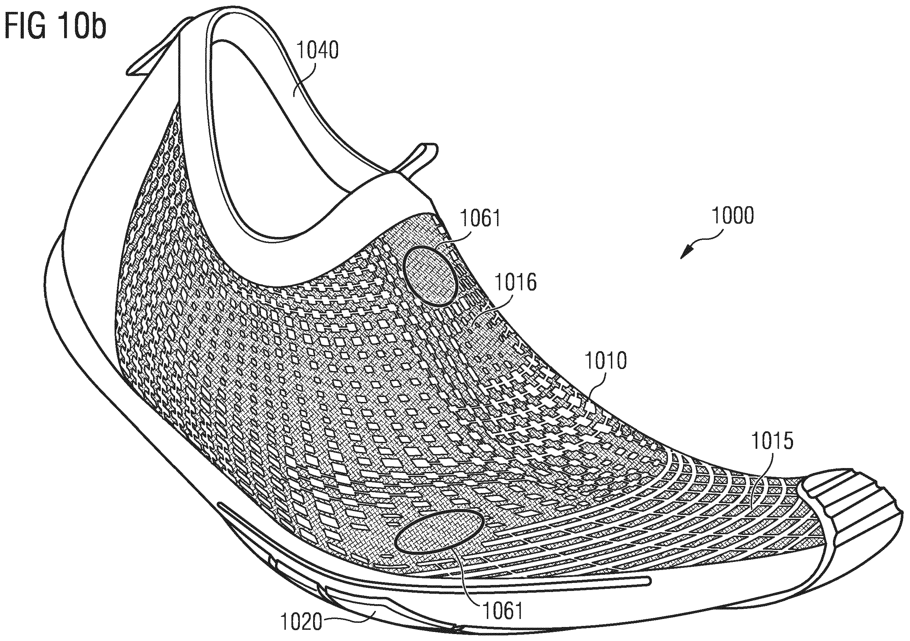

The zones 1051 which are printed area-wide, for example those adjacent to the sole or the collar or in the toe area, preferably comprise a width of 0.5 - 2 cm. Between said rim regions, i.e. for example in zones 1052, increased elastic restoring forces are not required. Correspondingly, the second layer may be arranged less densely, there. In some zones 1061, a reduced elastic restoring force is provided in order to achieve an increased wearing comfort. There, the first layer 1015 remains free of the second layer. Preferably, this is the case in the zone of the upper instep (Fig. 10b) such that an increased extension of the portion is enabled, there. Hence, putting on the shoe is facilitated and the wearing comfort is increased. Moreover, zones are located above the phalanx proximalis of the great toe (Fig. 10a) and above the phalanx distalis of the little toe (Figs. 10b, c) such that the rolling motion of the foot is not constricted. It is particularly advantageous, as already explained, to provide transition regions between the zones 1061 and the extended zones 1051 of the second layer by means of zones 1052 with isolated layer areas. By means of isolated areas of the layer, the corresponding elastic properties can be controlled particularly smoothly. Hence, the elastic properties can be embodied in a particularly even manner without having any jumps, e.g. along the lines 1055 which are arranged in a star-like manner.

In addition, in the embodiment 1001, as can also be seen from Fig. 10c, the second layer is arranged following a second structure. This structure follows circular arcs 1056 which are arranged along the circumference of the shoe similar to contour lines. By means of the second structure, the elasticity along the circumference of the shoe may be fine controlled. The heights of the lines or the height of the elements which are arranged along the lines preferably comprises the range 0.5 - 5 mm. As explained in connection with the first structure, zones with isolated areas of the layer may be combined with zones which are essentially printed area-wide. Particularly in the zone of the second layer adjacent to the tip toe, the arcs are preferably printed area-wide. Thus, a particularly high stability of the foot within the shoe can be achieved.

In order to follow both described structures, the individual elements of the second layer of embodiment 1001 are adapted such that they comprise essentially parallelogram-like shapes. Moreover, both described structures may overlap in particular zones. For example, a grating-like structure can thus arise. This may additionally prevent a shear strain of the portion which is displeasing to the user of the shoe.

In a further embodiment, the functional second layer can comprise a different and/or one or more further structures. Accordingly, also the individual elements of the second layer may have shapes which are different from parallelogram-like shapes.

In an embodiment, the global structure, e.g. the first structure and the second structure, of the second layer 1015 is realized such that the second layer is arranged more densely along the circumference of the shoe than in the perpendicular direction. Thus, the elastic tensile strength of the upper is increased along the circumference of the shoe and in this direction an increased stability is provided. However, along the longitudinal direction of the shoe, particularly in zones, in which a larger expansion is desired, e.g. according to the improved adjustment of the portion to the specific size or shape of the foot, the tensile strength is not increased as much, by means of a correspondingly lower density of the second layer.

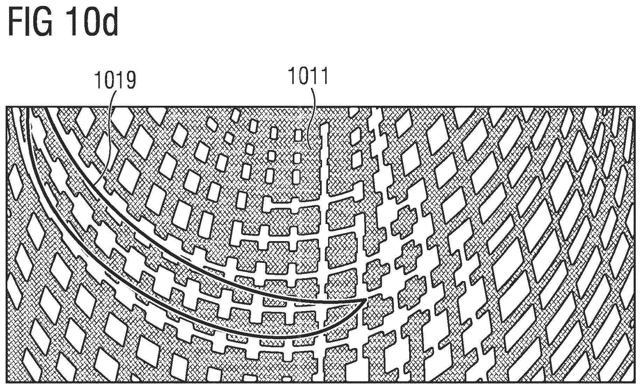

In addition, also zones of the second layer with a particularly large aspect ratio and thus particularly large anisotropy can be printed. If a tensile force acts along a highly elastic line formed by the second layer of the portion, the portion correspondingly exhibits a large tensile strength. However, if the tensile force acts perpendicular to the line, the tensile strength of the portion, due to the small dimension of the line in this direction, is almost unchanged. In the embodiment 1001 for example, a line 1019 in the region of the front instep ensures large restoring forces along the circumference of the shoe. This line element 1019 is illustrated in an enlarged manner in Fig. 10d. Since the line element can be designed such that it is particularly narrow, at the same time a small restoring force and thus a large flexibility in lateral direction is maintained such that the portion 1011 can globally expand towards the sides and thus can adjust to the instep of the foot. In an embodiment, a line element is on average not broader than 2 mm but longer than 20 mm. In a further embodiment, the second layer comprises at least one line element with an aspect ratio of at least 10, i.e. the average dimension in a first direction is at least 10 times larger than the average extension in a second direction. In a preferred embodiment, the average dimension in a second direction is not larger than 2 mm.

By the design flexibility which is enabled by direct printing methods, area-wide printed zones and isolated layer areas comprising various shapes and very different sizes may be combined arbitrarily but also emphasized individually. Thus, a particularly good local adjustment of functionalities can be achieved. Therein, not only the degree of a particular functionality, i.e. for example the elasticity, may be precisely controlled but also the directional dependence of the functionality can be fine-controlled in a particularly advantageous manner by means of printed functional second layers. Moreover, the corresponding manufacturing method enabled by the direct printing requires only few and simple steps and thus allows a particularly fast and cost-effective manufacturing process.

## Claims

1. Method of direct printing onto a first layer of at least a portion of an upper of a shoe, comprising
providing the first layer; and
printing a functional second layer directly onto the first layer;
wherein printing the functional second layer directly onto the first layer comprises:
printing a first sublayer of the functional second layer directly onto the first layer;
drying at least a surface of the first sublayer; and
printing a second sublayer of the functional second layer directly onto at least a portion of the first sublayer.

2. Method according to claim 1, further comprising printing a functional third layer directly onto the functional second layer or the first layer.

3. Method according to claim 2, further comprising drying the functional second layer prior to printing the functional third layer.

4. Method according to any of the claims 1-3, further comprising curing the functional second layer.

5. Method according to any of the claims 1-4, wherein the first layer is elastic.

6. Method according to any of the claims 1-5, wherein printing the functional second layer directly onto the first layer comprises screen-printing or ink jet printing the functional second layer.

7. Method according to any of the claims 1-6, wherein the functional second layer is only arranged on selected zones of the first layer, wherein the zones are arranged along at least one of a collar, a toe area, a heal area, an area of later or medial midfoot joints or the upper, and a transition area between a sole and the upper.

8. Method according to any of the claims 1-7, wherein the functional second layer comprises a total thickness ranging from 0.03 mm to 1 mm.

9. Method according to any of the claims 1-8, wherein printing the functional second layer comprises printing the functional second layer with varying thickness.

10. Method according to any of the claims 1-9, wherein the tensile strength of the portion is at least doubled when compared to the first layer which is not printed and wherein the portion is elastically deformable by at least 30% in at least one direction.

11. Method according to any of the claims 1-10, wherein printing the functional second layer comprises realizing at least one gap in the functional second layer.

12. Method according to any of the claims 1-11, wherein printing the functional second layer comprises adjusting at least one of a printing pattern and a thickness of the functional second layer during printing based on particular needs of an individual customer.

13. Method according to any of the claims 1-12, the method further comprising producing a printing pattern for printing onto the first layer; wherein printing the functional second layer directly onto the first layer is based on the printing pattern.

14. Upper of a shoe manufactured by a method according to any of the claims 1-13.

15. Shoe comprising an upper according to claim 14.

## Patentansprüche

1. Verfahren zum direkten Drucken auf eine erste Schicht von mindestens einem Abschnitt eines Schuhoberteils, umfassend
Bereitstellen der ersten Schicht; und
Drucken einer funktionellen zweiten Schicht direkt auf die erste Schicht;
wobei das Drucken der funktionellen zweiten Schicht direkt auf die erste Schicht umfasst:
Drucken einer ersten Teilschicht der funktionellen zweiten Schicht direkt auf die erste Schicht;
Trocknen mindestens einer Oberfläche der ersten Teilschicht; und
Drucken einer zweiten Teilschicht der funktionellen zweiten Schicht direkt auf mindestens einen Abschnitt der ersten Teilschicht.

2. Verfahren nach Anspruch 1, ferner umfassend das Drucken einer funktionellen dritten Schicht direkt auf die funktionelle zweite Schicht oder die erste Schicht.

3. Verfahren nach Anspruch 2, ferner umfassend das Trocknen der funktionellen zweiten Schicht vor dem Drucken der funktionellen dritten Schicht.

4. Verfahren nach einem der Ansprüche 1-3, ferner umfassend das Härten der funktionellen zweiten Schicht.

5. Verfahren nach einem der Ansprüche 1-4, wobei die erste Schicht elastisch ist.

6. Verfahren nach einem der Ansprüche 1-5, wobei das Drucken der funktionellen zweiten Schicht direkt auf die erste Schicht das Siebdrucken oder Tintenstrahldrucken der funktionellen zweiten Schicht umfasst.

7. Verfahren nach einem der Ansprüche 1-6, wobei die funktionelle zweite Schicht nur auf ausgewählten Zonen der ersten Schicht angeordnet ist, wobei die Zonen entlang mindestens einem von einem Kragen, einem Zehenbereich, einem Schaftbereich, einem Bereich von späteren oder medialen Mittelfußgelenken oder dem Oberteil und einem Übergangsbereich zwischen einer Sohle und dem Oberteil angeordnet sind.

8. Verfahren nach einem der Ansprüche 1-7, wobei die funktionelle zweite Schicht eine Gesamtdicke im Bereich von 0,03 mm bis 1 mm umfasst.

9. Verfahren nach einem der Ansprüche 1-8, wobei das Drucken der funktionellen zweiten Schicht das Drucken der funktionellen zweiten Schicht mit variierender Dicke umfasst.

10. Verfahren nach einem der Ansprüche 1-9, wobei die Zugfestigkeit des Abschnitts im Vergleich zu der ersten Schicht, die nicht gedruckt ist, mindestens verdoppelt ist und wobei der Abschnitt in mindestens einer Richtung um mindestens 30 % elastisch verformbar ist.

11. Verfahren nach einem der Ansprüche 1-10, wobei das Drucken der funktionellen zweiten Schicht das Realisieren mindestens eines Spalts in der funktionellen zweiten Schicht umfasst.

12. Verfahren nach einem der Ansprüche 1-11, wobei das Drucken der funktionellen zweiten Schicht das Einstellen mindestens eines von einem Druckmuster und einer Dicke der funktionellen zweiten Schicht während des Druckens basierend auf bestimmten Bedürfnissen eines einzelnen Kunden umfasst.

13. Verfahren nach einem der Ansprüche 1-12, wobei das Verfahren ferner das Erzeugen eines Druckmusters zum Drucken auf die erste Schicht umfasst; wobei das Drucken der funktionellen zweiten Schicht direkt auf die erste Schicht auf dem Druckmuster basiert.

14. Schuhoberteil, hergestellt durch ein Verfahren nach einem der Ansprüche 1-13.

15. Schuh, umfassend ein Schuhoberteil nach Anspruch 14.

## Revendications

1. Procédé d'impression directe sur une première couche d'au moins une partie d'une tige d'une chaussure, comprenant :
l'obtention de la première couche ; et
l'impression d'une seconde couche fonctionnelle directement sur la première couche ;
dans lequel l'impression de la seconde couche fonctionnelle directement sur la première couche comprend :
l'impression d'une première sous-couche de la seconde couche fonctionnelle directement sur la première couche ;
le séchage d'au moins une surface de la première sous-couche ; et
l'impression d'une seconde sous-couche de la seconde couche fonctionnelle directement sur au moins une partie de la première sous-couche.

2. Procédé selon la revendication 1, comprenant en outre l'impression d'une troisième couche fonctionnelle directement sur la seconde couche fonctionnelle ou sur la première couche.

3. Procédé selon la revendication 2, comprenant en outre le séchage de la seconde couche fonctionnelle avant d'imprimer la troisième couche fonctionnelle.

4. Procédé selon l'une des revendications 1 à 3, comprenant en outre le durcissement de la seconde couche fonctionnelle.

5. Procédé selon l'une des revendications 1 à 4, dans lequel la première couche est élastique.

6. Procédé selon l'une des revendications 1 à 5, dans lequel l'impression de la seconde couche fonctionnelle directement sur la première couche comprend une impression sérigraphique ou par jet d'encre de la seconde couche fonctionnelle.

7. Procédé selon l'une des revendications 1 à 6, dans lequel la seconde couche fonctionnelle n'est agencée que sur des zones choisies de la première couche, les zones étant agencées le long d'au moins l'une d'entre une collerette, une région d'orteil, une région de talon, une région des articulations du centre du pied latérales et/ou médianes, de la tige, et une zone de transition entre une semelle et la tige.

8. Procédé selon l'une des revendications 1 à 7, dans lequel la seconde couche fonctionnelle présente une épaisseur totale allant de 0,03 mm à 1 mm.

9. Procédé selon l'une des revendications 1 à 8, dans lequel l'impression de la seconde couche fonctionnelle comprend l'impression de la seconde couche fonctionnelle avec une épaisseur variable.

10. Procédé selon l'une des revendications 1 à 9, dans lequel la résistance à la traction de ladite partie est au moins deux fois plus élevée que celle de la première couche qui n'est pas imprimée, et dans lequel ladite partie est élastiquement déformable d'au moins 30 % dans au moins une direction.

11. Procédé selon l'une des revendications 1 à 10, dans lequel l'impression de la seconde couche fonctionnelle comprend la réalisation d'au moins un intervalle dans la seconde couche fonctionnelle.

12. Procédé selon l'une des revendications 1 à 11, dans lequel l'impression de la seconde couche fonctionnelle comprend l'ajustement d'au moins l'un d'entre un motif d'impression et une épaisseur de la seconde couche fonctionnelle pendant l'impression, sur la base de besoins particuliers d'un client individuel.

13. Procédé selon l'une des revendications 1 à 12, le procédé comprenant en outre la production d'un motif d'impression à imprimer sur la première couche ; dans lequel l'impression de la seconde couche fonctionnelle directement sur la première couche est basée sur le motif d'impression.

14. Tige d'une chaussure fabriquée par un procédé selon l'une des revendications 1 à 13.

15. Chaussure comprenant une tige selon la revendication 14.
